# EUROPÄISCHE PATENTSCHRIFT

(11) **EP 3 713 813 B1**
(45) Veröffentlichungstag und Bekanntmachung des Hinweises auf die Patenterteilung: **06.07.2022**
(21) Anmeldenummer: 18795974.7
(22) Anmeldetag: 24.10.2018
(51) Int. Cl.: B62D 5/00, B62D 6/00

(54) **VERFAHREN ZUM KONFIGURIEREN UND ZUM STEUERN EINES LENKSYSTEMS, LENKSYSTEM UND FAHRZEUG**
METHOD FOR CONFIGURING AND CONTROLLING A STEERING SYSTEM, STEERING SYSTEM, AND VEHICLE
PROCEDE DE CONFIGURATION ET DE COMMANDE D'UN SYSTEME DE DIRECTION, SYSTEME DE DIRECTION ET VÉHICULE

(30) Priorität: 23.11.2017 DE 102017220973
(43) Veröffentlichungstag der Anmeldung: 30.09.2020
(73) Patentinhaber: Volkswagen Aktiengesellschaft, 38440 Wolfsburg (DE)
(72) Erfinder: KREIS, Christopher, 38126 Braunschweig (DE)
(86) Internationale Anmeldenummer: PCT/EP2018/079219
(87) Internationale Veröffentlichungsnummer: WO 2019/101464

(56) Entgegenhaltungen:
- WO-A1-2016/105316
- DE-A1- 10 358 499
- DE-A1-102010 048 163
- DE-A1-102010 049 580

## Beschreibung

Die vorliegende Erfindung betrifft ein Verfahren zum Konfigurieren eines Lenksystems für ein Fahrzeug, ein Verfahren zum Steuern eines Lenksystems für ein Fahrzeug, ein Lenksystem für ein Fahrzeug als solches sowie ein Fahrzeug.

Lenksysteme für Fahrzeuge werden einer stetigen Weiterentwicklung unterzogen. Auf Grund der dabei sich ändernden Mechanismen zur Steuerung und Umsetzung der Lenkvorgänge ergeben sich auch Veränderungen im Hinblick auf eine Rückmeldung an den Benutzer. Häufig ist es wünschenswert, dass für den Benutzer ein einmal erfahrenes und gewohntes Lenkgefühl trotz eines Wechsels des Lenksystems beibehalten werden kann.

Die DE 103 21 825 A1 beschreibt ein Verfahren zur Erzeugung von Lenkgefühl bei Steer-by-wire-Systemen, wobei ein Satz von Werten für ein kombiniertes Reaktionsmoment geschwindigkeitsabhängig und rückgekoppelt erzeugt und übertragen wird.

Die DE 10 2010 049 580 A1 beschreibt ein Verfahren zum Betreiben einer elektromechanischen Hilfskraftlenkung, bei welchem auf der Grundlage eines Modells ein Kompensationsmoment erzeugt und ausgeübt wird.

Die WO 2016/105316 A1 beschreibt ein System zum Erzeugen eines Lenkgefühls bei Steer-by-wire-Systemen, bei welchem für eine Rückmeldung ein Modell einer Hysteresekurve verwendet wird. Des Weiteren zeigt die DE 10 2010 048 163 A1 den Oberbegriff der unabhängigen Ansprüche.

Ein Modellieren entsprechender Konfigurationen zum Nachahmen eines Lenksystems auf einem anderen Lenksystem ist derzeit nur mit einem erheblichen Aufwand und auch nur eingeschränkt möglich. Gerade bei Steer-by-wire-Lenksystemen wäre eine einfache Übertragung von Konfigurationen wünschenswert, die ein bekanntes Lenkgefühl herkömmlicher Lenksysteme ermöglichen.

Der Erfindung liegt die Aufgabe zu Grunde, ein Verfahren zum Konfigurieren eines Lenksystems für ein Fahrzeug, ein Verfahren zum Steuern eines Lenksystems für ein Fahrzeug, ein Lenksystem für ein Fahrzeug sowie ein Fahrzeug als solches anzugeben, bei welchen in zuverlässiger Weise die Übertragung einer Konfiguration mit einfachen Mitteln möglich ist.

Die der Erfindung zu Grunde liegende Aufgabe wird bei einem Verfahren zum Konfigurieren eines Lenksystems für ein Fahrzeug erfindungsgemäß mit den Merkmalen des Anspruchs 1, bei einem Verfahren zum Steuern eines Lenksystems für ein Fahrzeug erfindungsgemäß mit den Merkmalen des Anspruchs 5 und bei einem Lenksystem für ein Fahrzeug erfindungsgemäß mit den Merkmalen des Anspruchs 7 gelöst. Vorteilhafte Weiterbildungen sind Gegenstand der jeweiligen abhängigen Ansprüche.

Gemäß einem ersten Aspekt der vorliegenden Erfindung wird ein Verfahren zum Konfigurieren eines Lenksystems für ein Fahrzeug geschaffen. Dabei ist das Lenksystem ausgebildet mit einem Lenkradaktuator, der auch als Lenkradaktor bezeichnet wird, zum Beaufschlagen eines Lenkmechanismus und insbesondere eines Lenkrads des Fahrzeugs, das heißt einem von einem Benutzer zu betätigen Mechanismus zum Ausführen einer Lenkoperation, mit einem Drehmoment und/oder mit einer Kraft. Des Weiteren ist das Lenksystem ausgebildet mit einer Steuereinheit, welche zum Steuern des Betriebs des Lenkradaktuators eingerichtet ist und dazu eine Lenkkraft- und/oder Lenkmomentvorgabeeinheit aufweist. Zum steuerbaren Vorgeben einer Lenkkraft und/oder eines Lenkmoments wird erfindungsgemäß eine Lenkkraft- und/oder Lenkmomentvorgabeeinheit mit einem neuronalen Netz verwendet. Des Weiteren ist oder wird das neuronale Netz erfindungsgemäß auf der Grundlage von Basisdaten zu einer Mehrzahl von Fahr- und/oder Lenkmanövern an mindestens einem Referenzlenksystem mindestens eines Referenzfahrzeugs, insbesondere als Trainingsdaten, trainiert und/oder konditioniert. Durch das Trainieren und/oder Konditionieren des neuronalen Netzes anhand der Basisdaten zu Fahr- und/oder Lenkmanövern wird eine Korrelation hergestellt zwischen Parametern, die den Lenk- und/oder Fahrzustand beschreiben, und Parametern, die im Zusammenhang stehen mit Steueroperationen zum Lenken des Fahrzeugs. Dadurch wird erreicht dass, sich in Bezug auf die Rückmeldung an den Benutzer ein neues und mit dem neuronalen Netz angelerntes Lenksystem in ähnlicher Weise verhält wie das dem Trainieren und Konditionieren zu Grunde gelegte Referenzsystem. Grob gesprochen fühlt sich das angelernte Lenksystem beim Lenken für den Benutzer wie das Referenzsystem an.

Das Trainieren und Konditionieren des zu Grunde liegenden neuronalen Netzes erfolgt in vorteilhafter Weise durch ein Erfassen von Basisdaten zu einer Mehrzahl von Fahr- und/oder Lenkmanövern. Die Fahr- und/oder Lenkmanöver erfolgen an mindestens einem Referenzlenksystem mindestens eines Referenzfahrzeugs. Auf der Grundlage der erfassten Basisdaten erfolgt dann das eigentliche Trainieren und/oder Konditionieren des neuronalen Netzes, nämlich unter Verwendung zumindest der erfassten Basisdaten.

Dabei können zusätzliche Daten einfließen, welche Zustände das zu Grunde liegenden Referenzfahrzeugs erfassen, die nicht oder mutmaßlich nicht mit dem eigentlichen Vorgang des Lenkens im Zusammenhang stehen.

Um die Realität und den Wirkmechanismus des Referenzlenksystems abbilden und nachahmen zu können, ist es gemäß einer bevorzugten Ausgestaltungsform des erfindungsgemäßen Verfahrens vorgesehen, dass beim Erfassen als Basisdaten ein oder mehrere Werte zu einer oder zu mehreren der Größen aus der Gruppe von Größen erfasst werden, die aufweist ein Lenkradmoment, ein Drehstabmoment, einen Lenkwinkel, eine Lenkwinkelgeschwindigkeit, eine Temperatur, einen Strom eines Lenkunterstützungsmotors, eine Bordnetzspannung des zu Grunde liegenden Fahrzeugs, einen Winkel des Lenkunterstützungsmotors des zu Grunde liegenden Lenksystems und eine Zahnstangenkraft des zu Grunde liegenden Lenksystems.

Bei einer anderen vorteilhaften Ausführungsform des erfindungsgemäßen Verfahrens werden beim Erfassen als Basisdaten Daten zu einem oder zu mehreren Fahrzeugen und/oder Fahrzeugtypen, zu einer oder zu mehreren Fahrbedingungen, z.B. Witterung, Untergrund, Beladung, und/oder zu einem oder zu mehreren Lenksystemen und/oder Lenksystemtypen - zum Beispiel ESP, mechanisch und/oder hydraulisch, erfasst und einzeln oder in Gruppen kombiniert oder insgesamt kombiniert dem Trainieren und/oder Konditionieren des neuronalen Netzes zu Grunde gelegt. Auf diese Weise ist es auch möglich, in einem Zielsystem, welches konfiguriert werden soll, zwischen verschiedenen Konfigurationen zu wechseln oder auf Grund einer kombinierten Konfiguration einen besonders zuverlässigen Lenkbetrieb mit Kraft- oder Momentenrückmeldung zu gewährleisten.

Gemäß einem weiteren Aspekt der vorliegenden Erfindung wird auch ein Verfahren zum Steuern eines Lenksystems für ein Fahrzeug geschaffen. Dabei ist das Lenksystem ausgebildet mit einem Lenkradaktuator zum Beaufschlagen eines Lenkmechanismus und/oder eines Lenkrads des Fahrzeugs mit einem Drehmoment und/oder mit einer Kraft. Des Weiteren ist das Lenksystem mit einer Steuereinheit ausgebildet, welche zum Steuern des Betriebs des Lenkradaktuators eingerichtet ist und dazu eine Lenkkraft- und/oder Lenkmomentvorgabeeinheit aufweist. Zum steuerbaren Vorgeben einer Lenkkraft und/oder eines Lenkmoments wird eine Lenkkraft- und/oder Lenkmomentvorgabeeinheit (37) mit einem neuronalen Netz verwendet wird. Das Lenksystem und insbesondere das neuronale Netz sind oder werden mit einem erfindungsgemäßen Verfahren zum Trainieren und/oder Konditionieren eines Lenksystems für ein Fahrzeug trainiert und/oder konditioniert.

Das Steuern des Lenksystems des zu Grunde liegenden Fahrzeugs lässt sich in besonders zuverlässiger Weise gestalten, wenn gemäß einer vorteilhaften Ausführungsform des erfindungsgemäßen Verfahrens dieses ausgebildet ist mit einem Schritt des Erfassens und Zuführens von Betriebsparametern aus dem zu Grunde liegenden Fahrzeug und/oder dem Lenksystem zu aktuellen Fahr- und/oder Lenkmanövern des zu Grunde liegenden Fahrzeugs zum neuronalen Netz und mit einem Schritt des Erhaltens von aus dem neuronalen Netz abgeleiteten Parametern in Abhängigkeit von den zugeführten Betriebsparametern. Schließlich werden aus dem neuronalen Netz abgeleitete Parameter als Steuerparameter zumindest für den Lenkradaktuator verwendet. Auf diese Weise stellt sich durch die Wirkung des neuronalen Netzes unter einem gegebenen Satz von Betriebsparametern am Lenkradaktuator ein vergleichbares Verhalten wie beim Referenzlenksystem ein. Treffen vorgegebene Betriebsparameter des Lenksystems des Fahrzeugs nicht exakt einen Satz von Referenzparametern, unter denen das neuronale Netz trainiert und konditioniert wurde, so bewirken die Mechanismen des neuronalen Netzes automatisch eine geeignete Betriebs- und/oder Steuerparameterausgabe, quasi nach Art einer Interpolation.

Ferner schafft die vorliegende Erfindung auch ein Lenksystem für ein Fahrzeug. Erfindungsgemäß ist das Lenksystem ausgebildet mit einem Lenkradaktuator zum Beaufschlagen eines Lenkmechanismus des Fahrzeugs mit einem Drehmoment und/oder mit einer Kraft und einer Steuereinheit, welche zum Steuern des Betriebs des Lenkradaktuators eingerichtet ist und dazu eine Lenkkraft- und/oder Lenkmomentvorgabeeinheit aufweist. Erfindungsgemäß weist die Lenkkraft- und/oder Lenkmomentvorgabeeinheit zum Vorgeben einer Lenkkraft und/oder eines Lenkmoments ein neuronales Netz auf, wobei das neuronale Netz auf der Grundlage von Basisdaten zu einer Mehrzahl von Fahr- und/oder Lenkmanövern an mindestens einem Referenzlenksystem mindestens eines Referenzfahrzeugs trainiert und/oder konditioniert ist.

Insbesondere sind dabei das Lenksystem und insbesondere das neuronale Netz mittels eines erfindungsgemäßen Verfahrens zum Konfigurieren eines Lenksystems trainiert und/oder konditioniert ausgebildet.

Besonders einfache Verhältnisse und ein zuverlässiger Betrieb des erfindungsgemäßen Lenksystems stellen sich ein, wenn das Lenksystem mit einem Radaktuator zum Verschwenken eines lenkbaren Rades des Fahrzeugs ausgebildet ist, über die Steuereinheit der Radaktuator und der Lenkradaktuator miteinander steuerbar wirkverbunden sind und/oder die Steuereinheit zum Steuern des Betriebs des Radaktuators eingerichtet ist.

Das erfindungsgemäße Lenksystem kann als Steer-by-wire-System ausgebildet sein.

Es bietet sich jedoch auch an, herkömmliche Lenksysteme, zum Beispiel auf der Grundlage von EPS, mechanischen und/oder hydraulischen Lenksystemen, sofern dies mit einem Lenkradaktuator ausgebildet sind, erfindungsgemäß zu modifizieren, um die Konfiguration des Lenksystems und damit das Lenkgefühl für den Benutzer in einer gewünschten Weise anzupassen.

### Kurzbeschreibung der Figuren

Weitere Einzelheiten, Merkmale und Vorteile der Erfindung ergeben sich aus der nachfolgenden Beschreibung und den Figuren.
- Figur 1: zeigt nach Art eines Flussdiagramms ein erfindungsgemäßes Verfahren zum Steuern eines Lenksystems.
- Figuren 2 und 3: zeigen schematisch nach Art von Blockdiagrammen Ausführungsformen des erfindungsgemäßen Lenksystems.
- Figuren 4 bis 6: zeigen schematisch Aspekte von Ausführungsformen des erfindungsgemäßen Lenksystems unter Verwendung neuronaler Netze.

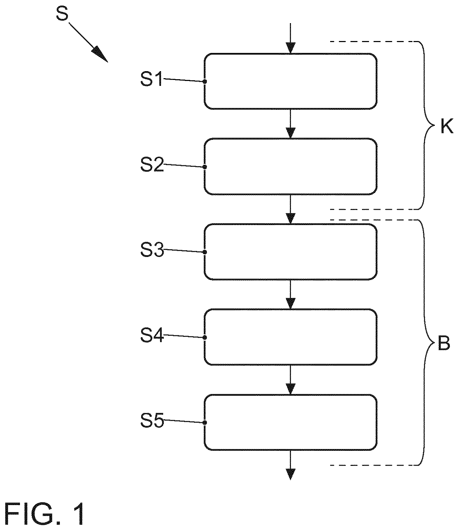

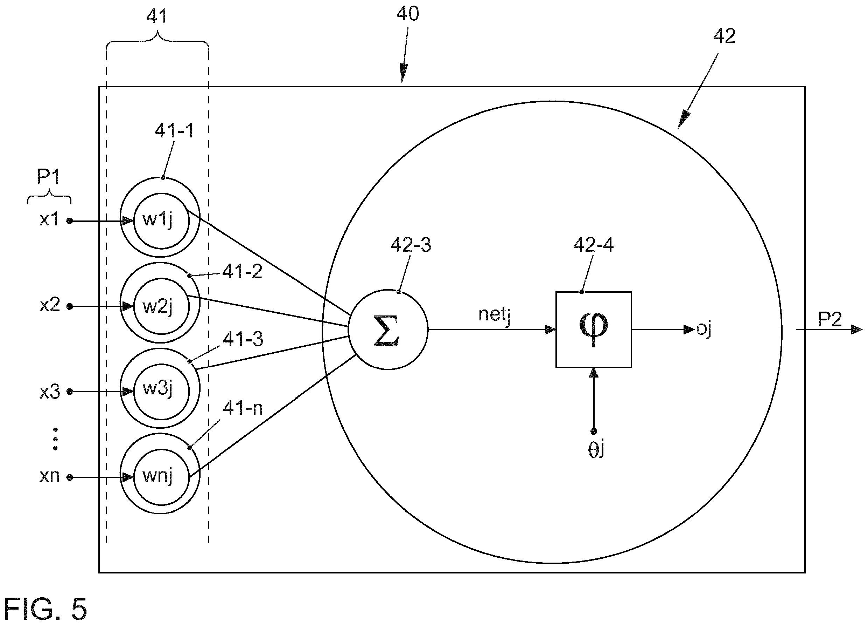

Nachfolgend werden unter Bezugnahme auf die Figuren 1 bis 6 Ausführungsbeispiele und der technische Hintergrund der Erfindung im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

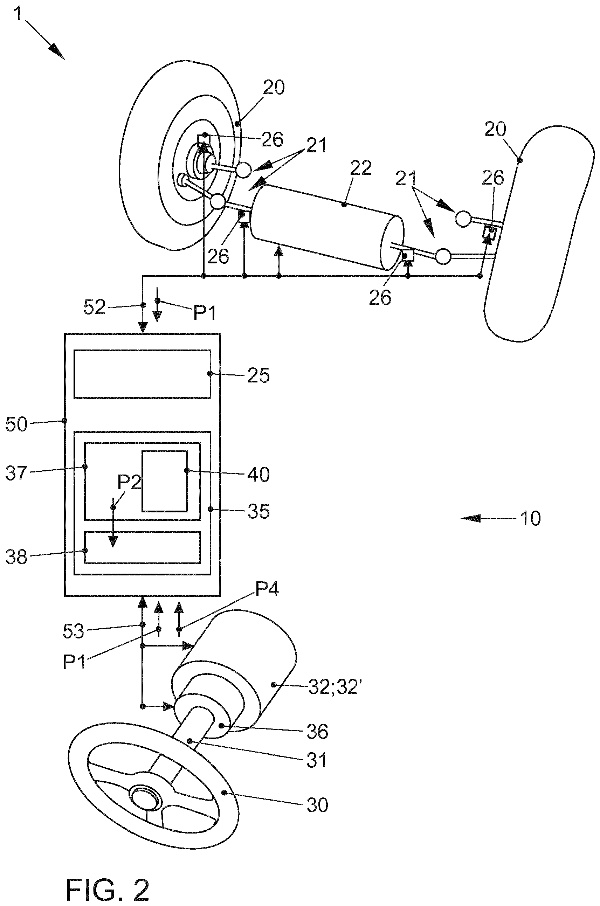

Bevor auf die Verfahrensaspekte der Erfindung im Detail eingegangen wird, soll anhand von Figur 2 zunächst die grundlegende Struktur eines erfindungsgemäßen Fahrzeugs 1 unter Verwendung einer Ausführungsform des erfindungsgemäßen Lenksystems 10 beschrieben werden.

Ein erfindungsgemäßes Lenksystem 10 eines zu Grunde liegenden erfindungsgemäßen Fahrzeugs 1 weist einen Lenkradaktuator 32 auf, der mechanisch über eine Welle 31 oder eine andere Mechanik mechanisch mit einem mit einem Lenkmechanismus 30 und insbesondere mit einem Lenkrad 30' gekoppelt ist und dazu dient, dem Benutzer durch entsprechende Beaufschlagung mit einer Kraft oder einem Drehmoment rückgekoppelt eine spürbare Rückmeldung in Bezug auf den Lenkvorgang zu verschaffen.

Dazu ist eine Steuereinheit 50 vorgesehen, welche zwischen dem Lenkradaktuator 32 mit dem darin enthaltenen Motor 32', der auch als Feedbackmotor aufgefasst werden kann, und einem Radaktuator 22 zum Betätigen eines lenkbaren Rades 20 über eine Lenkmechanik 21 über Steuer- und/oder Erfassungsleitungen 52 und 53 steuernd vermittelt.

Die gesamte Steuereinheit 50 kann aufgefasst werden als ein Zusammenschluss einer Steuereinheit 25 für den Radaktuator 20 einerseits und einer Steuereinheit 35 für den Lenkradaktuator 32. Bei der in Figur 2 dargestellten Ausführungsform ist eine übergeordnete gesamte Steuereinheit 50 außerhalb der Aktuatoren 22 und 32 ausgebildet. Diese Struktur ist jedoch nicht obligatorisch, vielmehr können die Steuereinheit 25 und 35 einerseits voneinander getrennt sein, andererseits jeweils in den zugeordneten Aktuatoren 22 bzw. 32 integriert ausgebildet sein.

Um eine entsprechende Kraft oder ein entsprechendes Drehmoment auf das Lenkrad 30 zur Rückkopplung an den Benutzer ausüben zu können, müssen der Lenkradaktuator 32 und insbesondere dessen Motor 32' über die Erfassungs- und/oder Steuerleitung 53 entsprechend angesteuert werden. Dazu weist die Steuereinheit 35 für den Lenkradaktuator 32 eine Vorgabeeinheit 37 auf, welche eingerichtet ist, auf der Grundlage zugeführte Parameter, zu Beispielmessdaten und dergleichen, den Wert für eine Lenkkraft oder für einen Lenkmoment zu generieren und bereitzustellen. Durch diese Vorgabe wird ein entsprechender Regler, nämlich ein Lenkkraft- und/oder Lenkmomentregler 38, angesteuert, der seinerseits ein Steuersignal erzeugt und auf der Erfassungs- und/oder Steuerleitung 53 an den Lenkradaktuator 32 und dessen Motor 32' ausgibt.

Erfindungsgemäß ist die Lenkkraft- und/oder Lenkmomentvorgabeeinheit 37 mit einem neuronalen Netz 40 ausgebildet, welches zum steuerbaren vorgeben einer Lenkkraft und/oder eines Lenkmoments eingerichtet ist und dazu auf der Grundlage von Basisdaten zu einer Mehrzahl von Fahr- und/oder Lenkmanövern an mindestens einem Referenzlenksystem mindestens eines Referenzfahrzeugs trainiert und/oder konditioniert ist oder wurde.

Im Betrieb werden über die Erfassungs- und/oder Steuerleitungen 52 und 53 bestimmte Betriebsparameter und/oder Zustandsparameter, zum Beispiel über die Sensoren 26 und 36, als Eingangsparameter der gesamten Steuereinheit 50 und damit der Steuereinheit 35 des Lenkradaktuators 32 und folglich dem neuronalen Netz 40 als Eingangsparameter oder Eingangssignale P1 zugeführt.

Auf Grund des Trainings und der Konditionierung des neuronalen Netzes 40 erzeugt dieses gemäß den Eingangsparameter an oder Eingangssignalen P1 einen Ausgangsparameter, zum Beispiel in Form eines Solllenkmoments P2. Der Wert für das Solllenkmoment P2 wird dem Regler 38 zugeführt, der seinerseits ein Sollmotormoment PIII erzeugt und auf die Erfassungs- und/oder Steuerleitung 53 zur Steuerung des Antriebs des Motors 32' des Lenkradaktuators 32 ausgibt.

Im Gegenzug kann über den Motor 32' - aufgefasst als Feedbackmotor - und/oder über einen expliziten Sensor 36 eine Rückmeldung erfolgen, indem ein Istlenkmoment P4 erfasst und als Wert an die Steuereinheit 50 rückgemeldet wird.

Figur 1 zeigt nun nach Art eines Flussdiagramms ein erfindungsgemäßes Verfahren S zum Steuern eines Lenksystems 10. Dort ist das Gesamtverfahren zum erfindungsgemäßen Steuern S eines Lenksystems 10 dargestellt. Das Gesamtverfahren S unterteilt sich in einen Konditionierungsabschnitt K und einen eigentlichen Betriebsabschnitt B.

Im Konditionierungsabschnitt K wird das neuronale Netz 40 durch Erfassen von Basisdaten im Schritt S1 im Zusammenhang mit einer Mehrzahl von Fahr- und/oder Lenkmanövern an mindestens einem Referenzlenksystem mindestens eines Referenzfahrzeugs und durch Zuführen dieser Basisdaten und damit Trainieren und/oder Konditionieren im Schritt S2 entsprechend vorbereitet und eingerichtet und liegt nach dieser Phase als trainiertes und/oder konditioniertes neuronales Netz 40 vor.

Im eigentlichen Betriebsabschnitt B wird das so trainiert und konditioniert neuronale Netz 40 für den steuernden Betrieb der zu Grunde liegenden Lenkkraft- und/oder Lenkmomentvorgabeeinheit 37 der Steuereinheit 35 für den Lenkradaktuator 32 und dessen Motor 32'eingesetzt, wie dies oben bereits erläutert wurde.

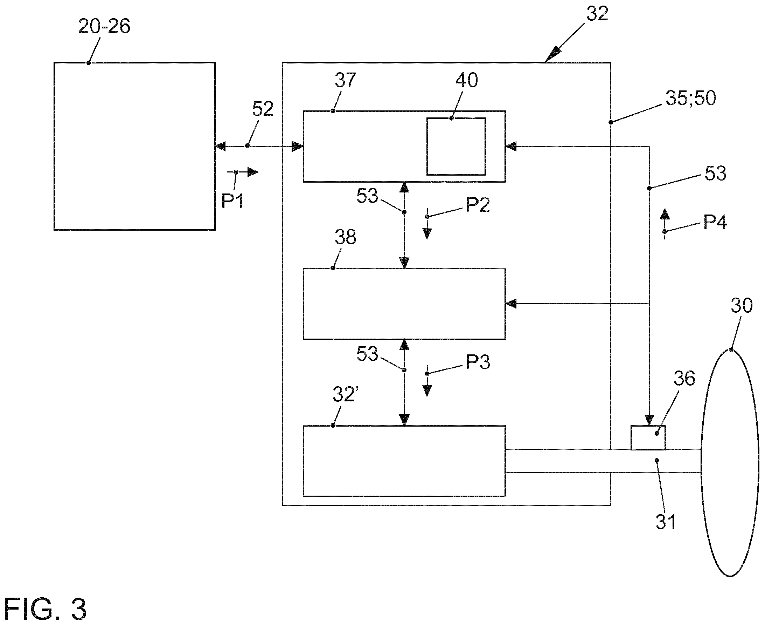

Figuren 2 und 3 zeigen also schematisch nach Art von Blockdiagrammen Ausführungsformen des erfindungsgemäßen Lenksystems 10. Dabei ist bei der Ausführungsform gemäß Figur 2 die übergeordnete Steuereinheit 50 als zusammenfassende Steuereinheit und externen zu den Aktuatoren 22 und 32 für das lenkbare Rad 20 bzw. für das Lenkrad 30 ausgebildet.

Bei der Ausführungsform gemäß Figur 3 jedoch ist die Steuereinheit 35 für das Lenkrad 30, aufgefasst als Ausführungsform des oben allgemein beschriebenen Lenkmechanismus, als Teil der übergeordneten Steuereinheit 50 in den Lenkradaktuator 32 integriert ausgebildet.

Zu erkennen ist wieder, dass der Lenkkraft- und/oder Lenkmomentvorgabeeinheit 37 mit dem dort enthaltenen neuronalen Netz 40 Parameter P1 in Form von Eingangssignalen zur Verarbeitung im neuronalen Netz 40 zugeführt werden. Das neuronale Netz 40 erzeugt daraufhin entsprechend dem Training und der Konditionierung als Ausgabe Parameter P2, zum Beispiel in Form eines Solllenkmoments, welches dem Lenkkraft- und/oder Lenkmomentregler 38 zugeführt wird. Dieser gibt aufgrund einer sprechenden Verarbeitung einen Parameter P3, zum Beispiel in Form eines Sollmotormoment oder eines dafür charakteristischen Werts oder Signals, auf die Erfassungs- und/oder Steuerleitung 53 aus.

In Folge wird der Motor 32' des Lenkradaktuators 32 zum Beispiel mittels des Parameters P3 in seinem Betrieb gesteuert und eine entsprechende Kraft oder entsprechendes Drehmoment erscheint auf der Lenkradwelle 31.

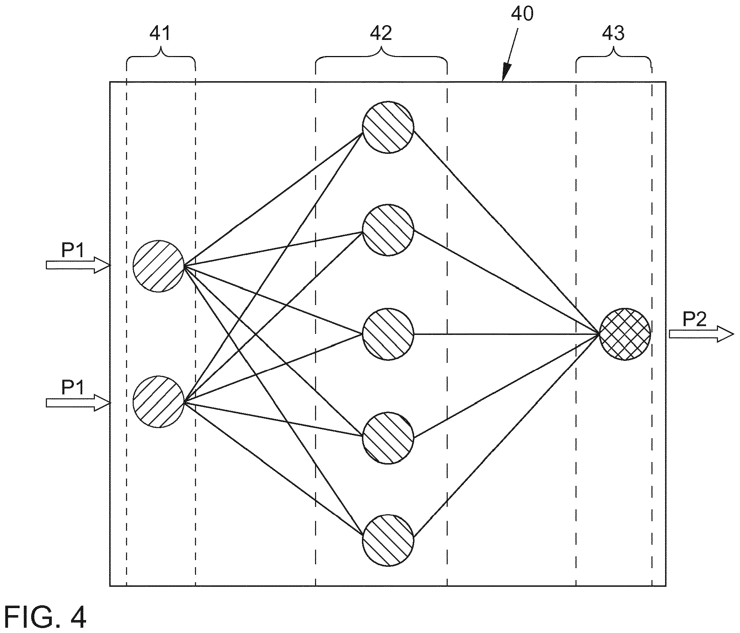

Figuren 4 bis 6 zeigen schematisch Aspekte von Ausführungsformen des erfindungsgemäßen Lenksystems 10 unter Verwendung neuronaler Netze 40.

Wie in den Figuren 4 bis 6 dargestellt ist, werden dem neuronalen Netz 40 eingangsseitig Eingangsparameter P1, zum Beispiel mit einer Mehrzahl von Größen und Werten x1, ..., xn zugeführt, so dass nach Verarbeitung ausgangsseitig Parameter P2, zum Beispiel in Form des oben erwähnten Solllenkmoments oder eines dafür repräsentativen Wertes, erscheinen und zur Steuerung des Lenkradaktuators 32 oder eines vorgeschalteten Reglers 38 verwendet werden können.

Das neuronale Netz 40 selbst besteht demzufolge aus einem Eingangsbereich, der auch als Eingabeschicht 41 bezeichnet wird, aus einem Ausgangsbereich, der auch als Ausgabeschicht 43 bezeichnet wird, und einer zwischen der Eingabeschicht 41 und der Ausgabeschicht 43 angeordneten Verarbeitungsschicht 42, gegebenenfalls mit einer Mehrzahl verborgener oder verdeckter Schichten 42-1, 42-2, die auch als Hidden-Layer bezeichnet werden.

Der Eingabeschicht 41 können entsprechende Knoten 41-1, ..., 41-n mit Gewichtsfunktionen w1j, ..., wnj zum Gewichten der Werte x1, ..., xn der Eingangsparameter P1 vorgesehen sein, so dass im Zusammenhang mit der Verarbeitungsschicht 42 zum Beispiel eine gewichtete Summierung 42-3 erfolgen kann die neuronale Verknüpfung 42-4 liefert dann nach Art einer Aktivierungsfunktion ϕ im Zusammenhang mit entsprechenden Schwellenwerten θj eine jeweilige neuronale Aktivierung oj, , welche im Zusammenwirken über alle Knoten der zur Erzeugung und zur Ausgabe des Parameters P2, zum Beispiel im Sinne eines Solllenkmoments, auf der Ausgabeschicht 43 führt.

Diese und weitere Merkmale und Eigenschaften der vorliegenden Erfindung werden an Hand der folgenden Darlegungen weiter erläutert:
Ein zusätzlicher oder alternativer Aspekt der vorliegenden Erfindung besteht darin, ein Lenksystem 10 zu schaffen, bei welchem mittels eines künstlichen neuronalen Netzes 40 ein Lenkgefühl ermittelt und/oder bereitgestellt wird.

Das Lenkgefühl heutiger Lenksysteme und insbesondere heutiger elektromechanischer Lenksysteme (EPS) wird häufig im Wesentlichen durch mechanisch festgelegte Parameter, zum Beispiel einer Übersetzung bei einer Kraft- und/oder Momentenübertragung, und durch Softwarealgorithmen und zum Beispiel durch eine dort ermittelte oder festgelegte Unterstützungskennlinie bestimmt.

Zukünftig werden sich Lenksysteme zum Beispiel zu einem Steer-by-Wire-System weiterentwickeln, bei dem sich das System in einen radseitigen Teil zum Bewegen der Räder und einen lenkradseitigen Teil zum Aufbringen des Lenkgefühls aufteilt, wobei beide Teile durch eine Datenübertragungsstrecke miteinander gekoppelt sind, sei diese drahtgebunden oder drahtlos. Eine derartige Struktur ist im Zusammenhang mit Figur 2 dargestellt.

Bei bisherigen EPS-Systemen ergibt sich das Lenkgefühl aus dem Zusammenwirken verschiedener Lenkfunktionen über einen ausgebildeten Unterstützungsmotor, von außen einwirkende Seitenkräfte der Räder und innerer mechanischer Eigenschaften, wie z. B. Reibung.

Auf Grund des von der Konfiguration einer EPS-Anordnung abweichenden Aufbaus eines Steer-by-Wire-Systems kann dieser Zusammenhang nicht mehr zum Tragen kommen. Das Lenkgefühl kann bei Steer-by-wire-Systemen von einem Lenkradaktuator vorgegeben werden, in welchem eine Handmomentenregelung implementiert ist, die ein von einem Vorgabemodul berechnetes Sollhandmoment einregelt.

Die Generierung einer derartigen Vorgabe ist sehr aufwendig und abstimmungsintensiv. Eine Portierung einer derartigen Konfiguration zur Erzeugung eines Lenkgefühls von einem Fahrzeug mit einer konventionellen EPS auf ein anders konfiguriertes Fahrzeug ist erwünscht, weil der Kunde gerne ein ihm bekanntes Lenkgefühl erwartet.

Auf Grund der anderen Wirkweise und der Softwarestruktur ist eine Portierung von einem konventionellen zu einem Steer-by-wire-System mit herkömmlichen Mitteln nur mit einem vergleichsweise hohen Aufwand und auch nur näherungsweise realisierbar.

Die vorliegende Erfindung soll dieses Problem lösen und es ermöglichen, eine Konfiguration zur Erzeugung eines Lenkgefühls auf zuverlässige, einfache und schnelle Weise und ohne zusätzlichen Applikationsaufwand und Expertenwissen von einem Lenksystem eines ersten Fahrzeugs auf ein Lenksystem 10 eines zweiten Fahrzeugs 1 zu übertragen oder zu portieren.

Erfindungsgemäß wird dabei unter anderem folgendes Vorgehen vorgeschlagen:
(1) Einfahren S1 von Basisdaten, die das Lenkgefühl des Lenksystems eines Referenzfahrzeugs abbilden. Dazu müssen möglichst viele unterschiedliche Fahrmanöver, auf unterschiedlichen Untergründen und bei unterschiedlichen Umgebungsbedingungen absolviert werden. Während der Fahrmanöver werden vielfältige Messdaten als Basisdaten erfasst, und zwar derart, dass die Basisdaten das Lenkmoment und insbesondere sämtliche mit einem Lenkgefühl im Zusammenhang stehenden technischen und/oder physikalischen Parameter und möglichst viele in Serienlenksystemen verfügbaren Messwerte abbilden.
(2) Beim Einfahren S1 der Basisdaten kann das Referenzfahrzeug auch mit zusätzlicher Messtechnik ausgerüstet sein. So kann die Qualität der Datenbasis verbessert werden. Weiterhin ist es auch möglich, Basisdaten von Fahrzeugen zu generieren, die nicht über eine elektromechanische Lenkung verfügen, sondern über eine hydraulische oder mechanische Lenkung. So können zum Beispiel bestimmte und auch historische Fahrzeuge oder Fahrzeugtypen erfasst und hinsichtlich ihres Lenkverhaltens und Lenkgefühls auf ein modernes Fahrzeug und dessen Lenksystem, zum Beispiel einem Steer-by-wire-System übertragen werden.
(3) Die Basisdaten können Messwerte unter anderem folgender Messgrößen aufweisen:
   o Lenkradmoment,
   o Drehstabmoment,
   o Lenkwinkel,
   o Lenkwinkelgeschwindigkeit,
   o Temperatur,
   o Strom des Lenkunterstützungsmotors,
   o Bordnetzspannung,
   o Winkel des Lenkunterstützungsmotors und
   o Zahnstangenkraft.

Um in einem Steer-by-Wire-Fahrzeug 1 das in den Basisdaten aufgezeichnete Lenkgefühl wiedergeben zu können, muss eine Architektur vorgesehen werden, wie sie zum Beispiel im Zusammenhang mit Figur 3 dargestellt ist.

Diese Architektur kann in einem Force-Feedback-Aktuator, der allgemein auch als Lenkradaktuator 32 oder Lenkradaktor bezeichnet wird, untergebracht sein.

Die in Rede stehende Architektur kann aber auch ganz oder teilweise in anderen Steuergeräten realisiert sein. Sensoren 26, 36 können auch als virtuelle Sensoren in Software ausgebildet sein.

Ein Lenkmomentenregler 38 kann zum Beispiel auch nach dem Stand der Technik ausgeprägt sein und von einem PID-Regler gebildet werden. Möglich sind auch komplexere Regler nach Reglerentwurfsverfahren wie H-unendlich, LQR etc.

Für die vorliegende Erfindung wichtige Aspekte sind unter anderem die Struktur und die Parametrierung des Moduls 37 der Lenkmomentvorgabe.

In diesem Modul befindet sich erfindungsgemäß ein neuronales Netz 40, welches unter Verwendung der gemessenen Basisdaten als Trainingsdaten so konditioniert und/oder angelernt wird, dass vom Modul 37 der Lenkmomentvorgabe ein Solllenkmoment P2 so erzeugt wird, dass das gemessene Istlenkradmoment - repräsentiert durch den Parameter P4 - dem gemessenen Lenkradmoment aus den Basisdaten entspricht.

Ein selbstlernendes neuronales Netz 40 - wie es zum Beispiel im Zusammenhang mit den Figuren 4 bis 6 dargestellt ist - ist der Funktion des menschlichen Gehirns nachempfunden, aber stark vereinfacht.

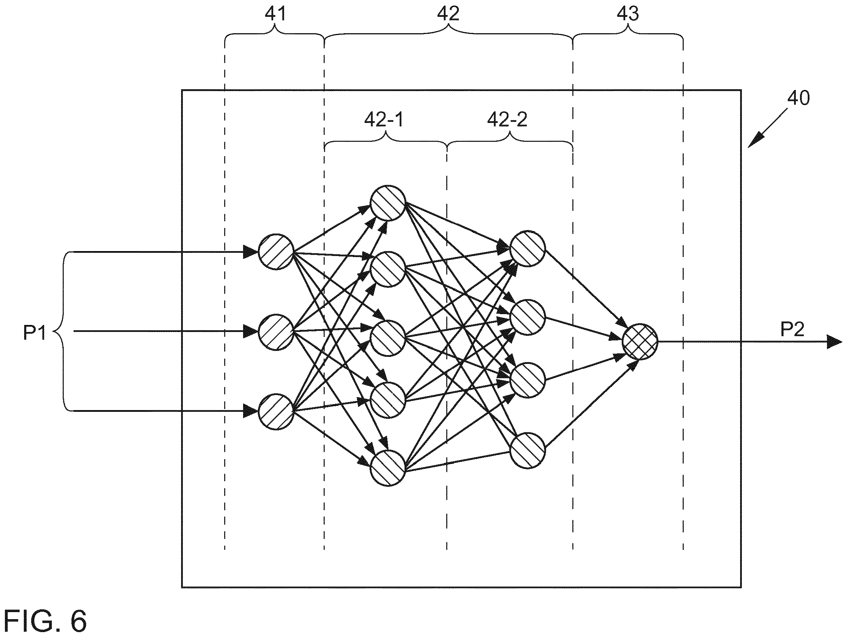

Es weist als einzelne Knoten so genannte künstliche Neuronen, wie sie im Zusammenhang mit den Figur 4 und 6 gezeigt sind, auf. Die künstlichen Neurone oder Knoten des neuronalen Netzes 40 sind prinzipiell identisch aufgebaut. Zugeführte Eingangssignale P1 werden gewichtet, aufsummiert und durch eine einfache Funktion ϕ in Abhängigkeit von einem Schwellwert θj zu einer Aktivierung oj verarbeitet.

In künstlichen neuronalen Netzen 40 werden je nach Komplexität der zu lösenden Aufgabe mehrere Schichten 41, 42, 43 von künstlichen Neuronen, die auch als Layer bezeichnet werden, verwendet. Eine derartige Layerstruktur ist im Zusammenhang mit den Figuren 4 bis 6 beschrieben.

Nachdem das künstliche neuronales Netz 40 mit den Trainingsdaten angelernt und/oder konditioniert wurde, steht die erwartete Lösung für eine große Anzahl von Eingangsdatenkombinationen bereit. Durch die Struktur des neuronalen Netzes 40 wird ein Solllenkmoment P2 interpoliert, wenn die Eingangsdaten P1 nicht exakt in den Trainingsdaten enthalten sind.

Je mehr Trainingsdaten vorliegen, desto besser wird die Lösung des Problems erreicht, weil weniger interpoliert werden muss und für eine etwaig notwendige Interpolation mehr Zwischenwerte zur Verfügung stehen.

In einer weiteren Ausführungsform der Erfindung wird diese nicht in einem Steer-by-Wire-Lenksystem 10 umgesetzt, sondern in einem an sich konventionellen Lenksystem mit mechanischer Lenksäule, in der ein Lenkmomentenregler implementiert ist.

Bei der vorliegenden Erfindung kann Erfindung kann zwischen einem Lenkmomentenregler 38 und einem Motor 32' für einen Aktor oder Aktuator 32 ein Überwachungsmechanismus zwischengeschaltet sein. Dieser kann dazu eingerichtet sein zu prüfen, ob ein Sollmotormoment P3 in jedem Betriebszustand einen für den Fahrer beherrschbaren Wert hat.

Da neuronale Netze 40 auf Grund ihrer komplexen, selbstlernenden Struktur durch einfache Softwaretests nur mit extrem großen Aufwand entsprechend der für Lenksysteme 10 geltenden Normen abzusichern und freizugeben sind, kann die Überwachung in eine einfachere Funktion ausgelagert werden. Diese vereinfachte Überwachungsfunktion ist dazu eingerichtet zu prüfen, ob der Wert einer Amplitude und/oder der Wert einer Frequenz des Lenkmomentes innerhalb plausibler Wertebereiche liegen.

Kommt es im neuronalen Netz 40 auf Grund eines Softwarefehlers oder auf Grund eines fehlerhaften Anlernens oder Interpolierens im jeweiligen Betriebspunkt zu einem unplausiblen Wert für das Sollmoment, wird dieser Wert auf ein für den Fahrer beherrschbares Maß reduziert.

Dieses Vorgehen kann unter Umständen zu haptischen Auffälligkeiten führen, schließt aber sicherheitskritische Situationen aus.

Mit der Erfindung lassen sich auch unterschiedliche Lenkgefühle von unterschiedlichen Referenzfahrzeugen abspeichern und wahlweise durch den Fahrer abrufen. Das kann auch über eine drahtlose Verbindung und z.B. von einem Mobiltelefon aus erfolgen. Der Fahrer eines normalen Alltagsfahrzeugs kann so auch das Lenkgefühl eines ganz bestimmten gewünschten Fahrzeugs exakt abrufen, zum Beispiel von einem historischen Fahrzeug, von einem Sportwagen oder dergleichen.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste

- 1: Fahrzeug

- 10: Lenksystem

- 20: (lenkbares) Rad
- 21: Aufhängung, Lenkmittel
- 22: Radaktuator
- 22': Motor, Feedbackmotor
- 25: Steuereinheit, Radaktuatorsteuerung
- 26: Sensor, Detektor

- 30: Lenkmechanismus
- 31: Lenkradwelle, Lenkradgetriebe
- 32: Lenkradaktuator
- 32': Motor/Feedbackmotor
- 35: Steuereinheit, Lenkradaktuatorsteuerung
- 36: Sensor, Detektor
- 37: Lenkkraft- und/oder Lenkmomentvorgabeeinheit
- 38: Lenkkraft- und/oder Lenkmomentregler

- 40: neuronales Netz
- 41: Eingabeschicht
- 42: Verarbeitungs-/Verknüpfungsschicht
- 42-1: (erste) verborgene Schicht (Hidden-Layer)
- 42-2: (zweite) verborgene Schicht (Hidden-Layer)
- 43: Ausgabeschicht

- 50: Steuereinheit
- 52: (radseitige) Steuer- und/oder Erfassungsleitung
- 53: (lenkradseitige) Steuer- und/oder Erfassungsleitung
- B: Betrieb des Lenksystems 10
- K: Konditionieren/Trainieren des Lenksystems 10

- P1: Parameter, Eingangssignale
- P2: Parameter, Solllenkmoment
- P3: Parameter, Sollmotormoment
- P4: Parameter, Istlenkmoment

- S: (gesamtes) Verfahren/Betriebsverfahren
- S1: Erfassen von Basisdaten
- S2: Trainieren/konditionieren des neuronalen Netzes 40
- S3: Erfassen und Zuführen von Betriebsparametern
- S4: Erhalten von abgeleiteten Parametern aus dem neuronalen Netz 40
- S5: Verwenden der abgeleiteten Parameter als Steuerparameter

## Patentansprüche

1. Verfahren zum Konfigurieren eines Lenksystems (10) für ein Fahrzeug (1), wobei
- das Lenksystem (10) ausgebildet ist mit einem Lenkradaktuator (32) zum Beaufschlagen eines Lenkmechanismus (30) und/oder eines Lenkrads des Fahrzeugs (1) mit einem Drehmoment und/oder mit einer Kraft sowie mit einer Steuereinheit (50), welche zum Steuern des Betriebs des Lenkradaktuators (32) eingerichtet ist und dazu eine Lenkkraft- und/oder Lenkmomentvorgabeeinheit (37) aufweist,
- zum steuerbaren Vorgeben einer Lenkkraft und/oder eines Lenkmoments eine Lenkkraft- und/oder Lenkmomentvorgabeeinheit (37) mit einem neuronalen Netz (40) verwendet wird **dadurch gekennzeichnet, dass**
- das neuronale Netz (40) auf der Grundlage von Basisdaten zu einer Mehrzahl von Fahr- und/oder Lenkmanövern an mindestens einem Referenzlenksystem mindestens eines Referenzfahrzeugs als Trainingsdaten trainiert und/oder konditioniert ist oder wird.

2. Verfahren nach Anspruch 1, mit den Schritten:
- Erfassen (S1) von Basisdaten zu einer Mehrzahl von Fahr- und/oder Lenkmanövern an mindestens einem Referenzlenksystem mindestens eines Referenzfahrzeugs und
- Trainieren und/oder Konditionieren (S2) des neuronalen Netzes (40) unter Verwendung zumindest der erfassten Basisdaten.

3. Verfahren nach Anspruch 2, bei welchem beim Erfassen (S1) als Basisdaten ein oder mehrere Werte zu einer oder zu mehreren der Größen aus der Gruppe von Größen erfasst werden, die aufweist ein Lenkradmoment, ein Drehstabmoment, einen Lenkwinkel, eine Lenkwinkelgeschwindigkeit, eine Temperatur, einen Strom eines Lenkunterstützungsmotors, eine Bordnetzspannung des zu Grunde liegenden Fahrzeugs (1), einen Winkel des Lenkunterstützungsmotors des zu Grunde liegenden Lenksystems (10) und eine Zahnstangenkraft des zu Grunde liegenden Lenksystems (10).

4. Verfahren nach Anspruch 2 oder 3, bei welchem beim Erfassen (S1) als Basisdaten Daten zu einem oder zu mehreren Fahrzeugen und/oder Fahrzeugtypen, zu einer oder zu mehreren Fahrbedingungen, z.B. Witterung, Untergrund, Beladung, und/oder zu einem oder zu mehreren Lenksystemen und/oder Lenksystemtypen erfasst und einzeln oder in Gruppen kombiniert oder insgesamt kombiniert dem Trainieren und/oder Konditionieren (S2) des neuronalen Netzes (40) zu Grunde gelegt werden.

5. Verfahren zum Steuern eines Lenksystems (10) für ein Fahrzeug (1), wobei
- das Lenksystem (10) ausgebildet ist mit einem Lenkradaktuator (32) zum Beaufschlagen eines Lenkmechanismus (30) und/oder eines Lenkrads des Fahrzeugs (1) mit einem Drehmoment und/oder mit einer Kraft sowie mit einer Steuereinheit (50), welche zum Steuern des Betriebs des Lenkradaktuators (32) eingerichtet ist und dazu eine Lenkkraft- und/oder Lenkmomentvorgabeeinheit (37) aufweist,
- zum steuerbaren Vorgeben einer Lenkkraft und/oder eines Lenkmoments eine Lenkkraft- und/oder Lenkmomentvorgabeeinheit (37) mit einem neuronalen Netz (40) verwendet wird, welches mit einem Verfahren nach einem der Ansprüche 1 bis 4 trainiert und/oder konditioniert ist oder wird.

6. Verfahren nach Anspruch 5, mit den Schritten:
- Erfassen und Zuführen (S3) von Betriebsparametern aus dem zu Grunde liegenden Fahrzeug (1) und/oder dem Lenksystem (10) zu aktuellen Fahr- und/oder Lenkmanövern des zu Grunde liegenden Fahrzeugs (1) zum neuronalen Netz (40),
- Erhalten (S4) von aus dem neuronalen Netz (40) abgeleiteten Parametern in Abhängigkeit von den zugeführten Betriebsparametern und
- Verwenden (S5) der aus dem neuronalen Netz (40) abgeleiteten Parameter als Steuerparameter zumindest für den Lenkradaktuator (30).

7. Lenksystem (10) für ein Fahrzeug (1),
mit:
- einem Lenkradaktuator (32) zum Beaufschlagen eines Lenkmechanismus (30) des Fahrzeugs (1) mit einem Drehmoment und/oder mit einer Kraft und
- einer Steuereinheit (50), welche zum Steuern des Betriebs des Lenkradaktuators (32) eingerichtet ist und dazu eine Lenkkraft- und/oder Lenkmomentvorgabeeinheit (37) aufweist,
wobei:
- die Lenkkraft- und/oder Lenkmomentvorgabeeinheit (37) ein neuronales Netz (40) aufweist **dadurch gekennzeichnet, dass**
- das neuronale Netz (40) auf der Grundlage von Basisdaten zu einer Mehrzahl von Fahr- und/oder Lenkmanövern an mindestens einem Referenzlenksystem mindestens eines Referenzfahrzeugs trainiert und/oder konditioniert ist.

8. Lenksystem (10) nach Anspruch 7, bei welchem das neuronale Netz (40) mittels eines Verfahrens nach einem der Ansprüche 1 bis 4 trainiert und/oder konditioniert ist oder wurde.

9. Lenksystem (10) nach einem der Ansprüche 7 und 8,
- welches mit einem Radaktuator (22) zum Verschwenken eines lenkbaren Rades (20) des Fahrzeugs (1) ausgebildet ist,
- bei welchem insbesondere über die Steuereinheit (50) der Radaktuator (22) und der Lenkradaktuator (32) miteinander steuerbar wirkverbunden sind und/oder die Steuereinheit (50) zum Steuern des Betriebs des Radaktuators (22) eingerichtet ist.

10. Lenksystem (10) nach einem der Ansprüche 6 bis 8, welches insbesondere als Steer-by-wire-System ausgebildet ist.

## Claims

1. Method for configuring a steering system (10) for a vehicle (1), wherein
- the steering system (10) is designed with a steering wheel actuator (32) for applying a torque and/or a force to a steering mechanism (30) and/or a steering wheel of the vehicle (1) and with a control unit (50) which is set up to control the operation of the steering wheel actuator (32) and has a steering force and/or steering torque specification unit (37) for this purpose,
- a steering force and/or steering torque specification unit (37) comprising a neural network (40) is used for the controllable specification of a steering force and/or a steering torque, **characterized in that**
- the neural network (40) is trained and/or conditioned based on baseline data relating to a plurality of driving and/or steering manoeuvres at at least one reference steering system of at least one reference vehicle as training data.

2. Method according to Claim 1, comprising the following steps:
- detecting (S1) baseline data relating to a plurality of driving and/or steering manoeuvres at at least one reference steering system of at least one reference vehicle and
- training and/or conditioning (S2) the neural network (40) using at least the detected baseline data.

3. Method according to Claim 2, in which one or more values relating to one variable or to a plurality of variables from the group of variables comprising a steering wheel torque, a torsion-bar torque, a steering angle, a steering angle speed, a temperature, a current of a steering support motor, an on-board supply system voltage of the vehicle (1) taken as a basis, an angle of the steering support motor of the steering system (10) taken as a basis and a toothed rack force of the steering system (10) taken as a basis is/are detected as baseline data during detection (S1).

4. Method according to Claim 2 or 3, in which data relating to one vehicle and/or vehicle type or to a plurality of vehicles and/or vehicle types, relating to one driving condition or to a plurality of driving conditions, for example weather, underground, load, and/or to one steering system and/or steering system type or to a plurality of steering systems and/or steering system types is/are detected as baseline data during detection (S1) and taken as a basis for the training and/or conditioning (S2) of the neural network (40) in a manner combined individually or in groups or combined overall.

5. Method for controlling a steering system (10) for a vehicle (1), wherein
- the steering system (10) is designed with a steering wheel actuator (32) for applying a torque and/or a force to a steering mechanism (30) and/or a steering wheel of the vehicle (1) and with a control unit (50) which is set up to control the operation of the steering wheel actuator (32) and has a steering force and/or steering torque specification unit (37) for this purpose,
- a steering force and/or steering torque specification unit (37) comprising a neural network (40) is used for the controllable specification of a steering force and/or a steering torque, said neural network being trained and/or conditioned using a method according to one of Claims 1 to 4.

6. Method according to Claim 5, comprising the following steps:
- detecting and supplying (S3) operating parameters from the vehicle (1) taken as a basis and/or the steering system (10) relating to current driving and/or steering manoeuvres of the vehicle (1) taken as a basis to the neural network (40),
- obtaining (S4) parameters derived from the neural network (40) based on the operating parameters supplied and
- using (S5) the parameters derived from the neural network (40) as control parameters at least for the steering wheel actuator (30).

7. Steering system (10) for a vehicle (1), comprising:
- a steering wheel actuator (32) for supplying a torque and/or a force to a steering mechanism (30) of the vehicle (1) and
- a control unit (50) which is set up to control the operation of the steering wheel actuator (32) and has a steering force and/or steering torque specification unit (37) for this purpose,
wherein:
- the steering force and/or steering torque specification unit (37) has a neural network (40), **characterized in that**
- the neural network (40) is trained and/or conditioned based on baseline data relating to a plurality of driving and/or steering manoeuvres at at least one reference steering system of at least one reference vehicle.

8. Steering system (10) according to Claim 7, in which the neural network (40) is or has been trained and/or conditioned by means of a method according to one of Claims 1 to 4.

9. Steering system (10) according to one of Claims 7 and 8,
- which is designed with a wheel actuator (22) for pivoting a steerable wheel (20) of the vehicle (1),
- in which the wheel actuator (22) and the steering wheel actuator (32) are operatively connected to one another in a controllable manner in particular by means of the control unit (50) and/or the control unit (50) is set up to control the operation of the wheel actuator (22).

10. Steering system (10) according to one of Claims 6 to 8, which is designed in particular as a steer-by-wire system.

## Revendications

1. Procédé de configuration d'un système de direction (10) destiné à un véhicule (1), dans lequel
- le système de direction (10) étant conçu avec un actionneur de volant (32), destiné à appliquer un couple et/ou une force à un mécanisme de direction (30) et/ou un volant du véhicule (1), et une unité de commande (50) qui est adaptée pour commander le fonctionnement de l'actionneur de volant (32) et qui comporte pour cela une unité de spécification de force de direction et/ou de couple de direction (37),
- une unité de spécification de force de direction et/ou de couple de direction (37) étant utilisée avec un réseau neuronal (40) pour spécifier de manière commandable une force de direction et/ou un couple de direction, **caractérisé en ce que**
- le réseau neuronal (40) est ou sera entraîné et/ou conditionné sous la forme de données d'apprentissage sur la base de données de base relatives à une pluralité de manœuvres de conduite et/ou de direction sur au moins un système de direction de référence d'au moins un véhicule de référence.

2. Procédé selon la revendication 1, comprenant les étapes suivantes :
- acquérir (S1) des données de base relatives à une pluralité de manœuvres de conduite et/ou de direction sur au moins un système de direction de référence d'au moins un véhicule de référence et
- entraîner et/ou conditionner (S2) le réseau neuronal (40) à l'aide d'au moins les données de base acquises.

3. Procédé selon la revendication 2, dans lequel une ou plusieurs valeurs relatives à une ou plusieurs des grandeurs du groupe de grandeurs, qui comporte un couple de volant, un couple de barre de torsion, un angle de direction, une vitesse angulaire de direction, une température, un courant de moteur de direction assistée, une tension de réseau de bord du véhicule concerné (1), un angle de moteur direction assisté du système de direction concerné (10), et une force de crémaillère du système de direction concerné (10), sont acquises comme données de base lors de l'acquisition (S1).

4. Procédé selon la revendication 2 ou 3, dans lequel des données relatives à un ou plusieurs véhicules et/ou types de véhicules, une ou plusieurs conditions de conduite, par exemple la météo, le sol, la charge, et/ou un ou plusieurs systèmes de direction et/ou types de systèmes de direction sont acquises et utilisées individuellement ou combinées en groupes ou totalement combinées lors de l'acquisition (S1) comme données de base pour l'entraînement et/ou le conditionnement (S2) du réseau neuronal (40).

5. Procédé de commande d'un système de direction (10) destiné à un véhicule (1),
- le système de direction (10) étant conçu avec un actionneur de volant (32), destiné à appliquer un couple et/ou une force à un mécanisme de direction (30) et/ou à un volant du véhicule (1), et une unité de commande (50) qui est adaptée pour commander le fonctionnement de l'actionneur de volant (32) et qui comporte pour cela une unité de spécification de force de direction et/ou de couple de direction (37),
- une unité de spécification de force de direction et/ou de couple de direction (37) étant utilisée avec un réseau neuronal (40), qui est ou sera entraîné et/ou conditionné à l'aide d'un procédé selon l'une des revendications 1 à 4, pour spécifier de manière commandable une force de direction et/ou un couple de direction.

6. Procédé selon la revendication 5, comprenant les étapes suivantes :
- détecter et fournir (S3) au réseau neuronal (40) des paramètres de fonctionnement du véhicule concerné (1) et/ou du système de direction (10) qui sont relatifs à des manœuvres de conduite et/ou de direction actuelles du véhicule concerné (1),
- obtenir (S4) des paramètres, dérivés du réseau neuronal (40), en fonction des paramètres de fonctionnement fournis et
- utiliser (S5) les paramètres dérivés du réseau neuronal (40) comme paramètres de commande destinés au moins à l'actionneur de volant (30).

7. Système de direction (10) destiné à un véhicule (1), ledit système de direction comprenant :
- un actionneur de volant (32) destiné à appliquer un couple et/ou une force à un mécanisme de direction (30) du véhicule (1) et
- une unité de commande (50) qui est adaptée pour commander le fonctionnement de l'actionneur de volant (32) et qui comporte pour cela une unité de spécification de force de direction et/ou de couple de direction (37),
- l'unité de spécification de force de direction et/ou de couple de direction (37) comportant un réseau neuronal (40), **caractérisé en ce que**
- le réseau neuronal (40) est entraîné et/ou conditionné sur la base de données de base relatives à une pluralité de manœuvres de conduite et/ou de direction sur au moins un système de direction de référence d'au moins un véhicule de référence.

8. Système de direction (10) selon la revendication 7, dans lequel le réseau neuronal (40) est ou a été entraîné et/ou conditionné à l'aide d'un procédé selon l'une des revendications 1 à 4.

9. Système de direction (10) selon l'une des revendications 7 et 8,
- lequel est conçu avec un actionneur de roue (22) destiné à faire pivoter une roue directrice (20) du véhicule (1),
- dans lequel, en particulier par le biais de l'unité de commande (50), l'actionneur de roue (22) et l'actionneur de volant (32) sont reliés fonctionnellement de manière commandable l'un à l'autre et/ou l'unité de commande (50) est adaptée pour commander le fonctionnement de l'actionneur de roue (22) .

10. Système de direction (10) selon l'une des revendications 6 à 8, lequel est conçu notamment comme un système steer-by-wire.
